# EUROPÄISCHE PATENTSCHRIFT

(11) **EP 2 685 819 B1**
(45) Veröffentlichungstag und Bekanntmachung des Hinweises auf die Patenterteilung: **13.07.2016**
(21) Anmeldenummer: 12709525.5
(22) Anmeldetag: 10.03.2012
(51) Int. Cl.: A01N 25/30, A01N 43/50, A01N 43/54, A01N 25/04, A01N 43/653, A01N 43/70, A01N 57/20

(54) **SUSPENSIONSKONZENTRATE**
SUSPENSION CONCENTRATES
SUSPENSIONS CONCENTRÉES

(30) Priorität: 17.03.2011 DE 102011014354
(43) Veröffentlichungstag der Anmeldung: 22.01.2014
(73) Patentinhaber: CLARIANT INTERNATIONAL LTD, 4132 Muttenz (CH)
(72) Erfinder: WACKER, Andreas, 68163 Mannheim (DE); SCHAEFER, Carsten, 84453 Mühldorf (DE); WOERNDLE, Alexander, 60313 Frankfurt am Main (DE); MILBRADT, Robert, 65191 Wiesbaden (DE)
(74) Vertreter: Paczkowski, Marcus
(86) Internationale Anmeldenummer: PCT/EP2012/001080
(87) Internationale Veröffentlichungsnummer: WO 2012/123094

(56) Entgegenhaltungen:
- WO-A1-2008/138485
- WO-A1-2011/079187
- WO-A2-2010/121976

## Beschreibung

Die vorliegende Erfindung betrifft Suspensionskonzentrate enthaltend Copolymere sowie deren Verwendung als Pflanzenschutzmittel.

Pestizide werden üblicherweise in Form von Zubereitungen eingesetzt, um eine bessere Ausnutzung der Wirkstoffe zu erzielen. Solche Zubereitungen werden auch als Formulierungen bezeichnet und liegen in der Regel in fester oder in flüssiger Form vor. Flüssige Pestizidzubereitungen haben den Vorteil, dass sie für den Anwender leichter dosierbar und homogen in der Spritzbrühe verteilbar sind. Bei modernen Pestiziden handelt es sich meistens um komplexe organische Moleküle, die nur eine geringe Löslichkeit in Wasser oder anderen Lösemitteln aufweisen. Daher werden diese Pestizide zweckmäßigerweise in dispergierter Form als Suspensionskonzentrate zur Verfügung gestellt.

Zur Stabilisierung von Pestiziden in Suspensionskonzentraten sind Dispergiermittel notwendig. Diese Dispergiermittel, gegebenenfalls unterstützt durch geeignete oberflächenaktive Substanzen (Netzmittel), ermöglichen die Herstellung des Suspensionskonzentrates, welches in der Regel mit Hilfe einer Mahlung bewerkstelligt wird, um hohe mechanische Kräfte in das System einzutragen. Nach dem Mahlvorgang wirken die Dispergiermittel durch sterische oder elektrostatische Wechselwirkungen stabilisierend auf das System. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden.

Beispiele für kommerziell bedeutende Dispergiermittel, die in großen Mengen zur Herstellung von Suspensionskonzentraten verwendet werden, sind sulfonierte Kondensationsprodukte aus Alkylnaphthalinen mit Formaldehyd (Naphthalinsulfonate) oder Ligninsulfonate. Diese Produkte genügen jedoch nicht mehr den heutigen Anforderungen hinsichtlich toxikologischer Unbedenklichkeit und Anwendersicherheit, da sie haut- und augenreizend wirken. Außerdem sind diese Dispergiermittel nicht besonders effektiv, d. h. es werden relativ große Mengen benötigt, um stabile Suspensionskonzentrate zu erhalten.

Aufgabe der vorliegenden Erfindung war es daher, Suspensionskonzentrate bereit zu stellen, die auf Dispergiermitteln basieren, die auch in geringen Mengen eine ausreichende Stabilisierung des Suspensionskonzentrates ermöglichen und die sich durch ein vorteilhaftes toxikologisches Profil auszeichnen.

Überraschenderweise wurde nun gefunden, dass diese Aufgabe durch Suspensionskonzentrate enthaltend
a) ein oder mehrere bei Raumtemperatur (25 °C) feste Pestizide, und
b) ein oder mehrere Copolymere ausgewählt aus der Gruppe bestehend aus Copolymeren der Formel (CP₁) 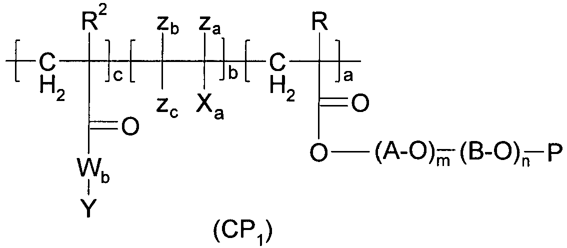 wobei
   die Indices a, b und c den molaren Anteil der jeweiligen Struktureinheit angeben,
   a 0,01 - 0,8 ist,
   b 0,001 - 0,8 ist,
   c 0,001 - 0,8 ist, und
      die Summe aus a + b + c gleich 1 ist,
   A für C₂-C₄-Alkylen steht,
   B für ein von A unterschiedliches C₂-C₄-Alkylen steht,
   R für Wasserstoff oder Methyl steht,
   m eine Zahl von 1 bis 500 ist,
   n eine Zahl von 1 bis 500 ist, und
      die Summe m + n gleich 2 bis 1000 ist,
   Xa für einen aromatischen oder araliphatischen Rest mit 3 bis 30, vorzugsweise 6 bis 30 und besonders bevorzugt 6 bis 20 C-Atomen steht, der gegebenenfalls eines oder mehrere der Heteroatome N, O und S enthält,
   za für H oder (C₁-C₄)-Alkyl steht,
   zb für H oder (C₁-C₄)-Alkyl steht,
   zc für H oder (C₁-C₄)-Alkyl steht,
   R² für Wasserstoff oder Methyl steht,
   Y für einen aliphatischen Kohlenwasserstoffrest mit 6 bis 30 C-Atomen steht, der
      linear oder verzweigt, oder auch cyclisch sein kann, und die Heteroatome O, N und/oder S enthalten kann und auch ungesättigt sein kann,
   W_{b} für Sauerstoff oder die Gruppe NH steht,
   P für H, SO₃M, CH₂COOM, PO₃M₂, 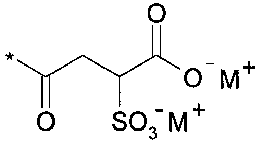 oder 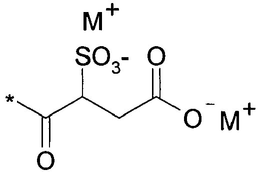 steht, und
   M für H, ein einwertiges Metallkation, ein zweiwertiges Metallkation, NH₄⁺, ein sekundäres, tertiäres oder quartäres Ammoniumion, oder eine Kombination davon, oder für Äquivalente von zwei-, drei- oder mehrwertigen Metallionen steht, und
c) gegebenenfalls ein oder mehrere weitere Hilfsstoffe und
d) ein oder mehrere Lösemittel,
gelöst wird.

Gegenstand der Erfindung sind daher Suspensionskonzentrate enthaltend
a) ein oder mehrere bei Raumtemperatur (25 °C) feste Pestizide
   und
b) ein oder mehrere Copolymere ausgewählt aus der Gruppe bestehend aus Copolymeren der Formel (CP₁) 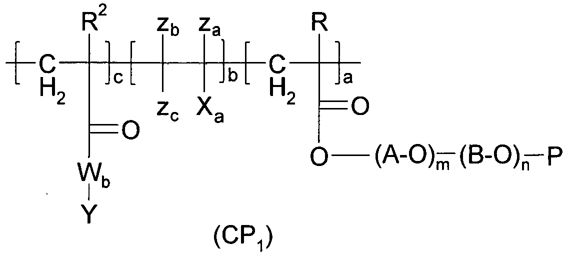 wobei
   die Indices a, b und c den molaren Anteil der jeweiligen Struktureinheit angeben,
   a 0,01 - 0,8 ist,
   b 0,001 - 0,8 ist,
   c 0,001 - 0,8 ist, und
      die Summe aus a + b + c gleich 1 ist,
   A für C₂-C₄-Alkylen steht,
   B für ein von A unterschiedliches C₂-C₄-Alkylen steht,
   R für Wasserstoff oder Methyl steht,
   m eine Zahl von 1 bis 500 ist,
   n eine Zahl von 1 bis 500 ist, und
      die Summe m + n gleich 2 bis 1000 ist,
   Xₐ für einen aromatischen oder araliphatischen Rest mit 3 bis 30, vorzugsweise 6 bis 30 und besonders bevorzugt 6 bis 20 C-Atomen steht, der gegebenenfalls eines oder mehrere der Heteroatome N, O und S enthält,
   zₐ für H oder (C₁-C₄)-Alkyl steht,
   z_{b} für H oder (C₁-C₄)-Alkyl steht,
   z_{c} für H oder (C₁-C₄)-Alkyl steht,
   R² für Wasserstoff oder Methyl steht,
   Y für einen aliphatischen Kohlenwasserstoffrest mit 6 bis 30 C-Atomen steht, der linear oder verzweigt, oder auch cyclisch sein kann, und die Heteroatome O, N und/oder S enthalten kann und auch ungesättigt sein kann,
   W_{b} für Sauerstoff oder die Gruppe NH steht,
   P für H, SO₃M, CH₂COOM, PO₃M₂, 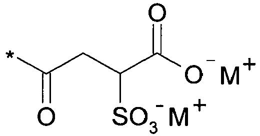 oder 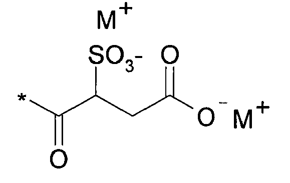 steht, und
   M für H, ein einwertiges Metallkation, ein zweiwertiges Metallkation, NH₄⁺, ein sekundäres, tertiäres oder quartäres Ammoniumion, oder eine Kombination davon, oder für Äquivalente von zwei-, drei- oder mehrwertigen Metallionen steht,
   und
c) gegebenenfalls ein oder mehrere weitere Hilfsstoffe und
d) ein oder mehrere Lösemittel.

Das Symbol "*" in den Sulfosuccinat-Formeln unter der Definition von "P" bedeutet, dass die entsprechenden Struktureinheiten über die mit dem Symbol gekennzeichnete Bindung an die Gruppe -(A-O)ₘ-(B-O)ₙ- im Copolymer b) gebunden ist.

EP 0 007 731 A2 beschreibt die Verwendung von Copolymeren als Dispergiermittel in Suspensionskonzentraten.

In WO 2008/015185 A2 werden Copolymere beschrieben, die aus Acrylsäuren, 2-Acrylamido-2-methylpropansulfonsäure und Acrylsäureestern in bestimmten Mengenverhältnissen bestehen und die als Dispergiermittel für Pestizidzubereitungen geeignet sind.

WO 2008/036864 A2 offenbart die Verwendung von wasserlöslichen Copolymeren als Dispergiermittel für wässerlösliche Wirkstoffe.

WO 2010/121976 A2 beschreibt Dispergiermittel für Pestizidzubereitungen, die auf einem 2-Acrylamido-2-methylpropansulfonsäure enthaltenden Copolymer basieren.

WO 2008/138485 A1 beschreibt nicht-ionische wasserlösliche Additive, die als Dispergiermittel für Pigmente eingesetzt werden können. WO 2008/138486 A1 beschreibt anionische wasserlösliche Additive, die als Dispergiermittel für Pigmente eingesetzt werden können. Die Verwendung als Dispergiermittel für Pestizide ist nicht beschrieben.

Unter "Pestiziden" werden im Rahmen der vorliegenden Erfindung Herbizide, Fungizide, Insektizide, Akarizide, Bakterizide, Molluskide, Nematizide und Rodentizide sowie Phytohormone verstanden. Phytohormone steuern physiologische Reaktionen, wie Wachstum, Blührhythmus, Zellteilung und Samenreifung. Eine Übersicht der relevantesten Pestizide findet sich beispielsweise in "The Pesticide Manual" des British Crop Protection Council, 14th Edition 2006, Editor: C D S Tomlin.

Raumtemperatur bedeutet im Rahmen der vorliegenden Erfindung 25 °C.

Das eine oder die mehreren Pestizide der Komponente a) der erfindungsgemäßen Suspensionskonzentrate werden vorzugsweise ausgewählt aus der Gruppe bestehend aus Herbiziden, Insektiziden und Fungiziden.

Bevorzugte Fungizide sind aliphatische Stickstofffungizide, Amidfungizide wie Acylaminosäurefungizide oder Anilidfungizide oder Benzamidfungizide oder Strobilurinfungizide, aromatische Fungizide, Benzimidazolfungizide, Benzothiazolfungizide, Carbamatfungizide, Conazolfungizide wie Imidazole oder Triazole, Dicarboximidfungizide, Dithiocarbamatfungizide, Imidazolfungizide, Morpholinfungizide, Oxazolfungizide, Pyrazolfungizide, Pyridinfungizide, Pyrimidinfungizide, Pyrrolfungizide, Chinonfungizide.

Bevorzugte Herbizide sind Amidherbizide, Anilidherbizide, aromatische Säureherbizide wie Benzoesäureherbizide oder Picolinsäureherbizide, Benzoylcyclohexanedionherbizide, Benzofuranylalkylsulfonatherbizide, Benzothiazolherbizide, Carbamatherbizide, Carbanilatherbizide, Cyclohexenoximherbizide, Cyclopropylisoxazolherbizide, Dicarboximidherbizide, Dinitroanilinherbizide, Dinitrophenolherbizide, Diphenyletherherbizide, Dithiocarbamatherbizide, Imidazolinonherbizide, Nitrilherbizide, Organophosphorherbizide, Oxadiazolonherbizide, Oxazolherbizide, Phenoxyherbizide wie Phenoxyessigsäureherbizide oder Phenoxybutansäureherbizide oder Phenoxypropionsäureherbizide oder Aryloxyphenoxypropiosäureherbizide, Pyrazolherbizide wie Benzoylpyrazolherbizide oder Phenylpyrazolherbizide, Pyridazinonherbizide, Pyridinherbizide, Thiocarbamatherbizide, Triazinherbizide, Triazinonherbizide, Triazolherbizide, Triazolonherbizide, Triazolopyrimidinherbizide, Uracilherbizide, Ureaherbizide wie Phenylharnstoffherbizide oder Sulfonylharnstoffherbizide.

Bevorzugte Insektizide sind Carbamatinsektizide, wie Benzofuranylmethylcarbamat- Insektizide oder Dimethylcarbamatinsektizide oder Oximcarbamatinsektizide oder Phenylmethylcarbamatinsektizide, Diamidinsektizide, Insektenwachstumsregulatoren, Macrozyklische Lactoneinsektizide wie Avermectininsektizide oder Milbemycininsektizide oder Spinosyninsektizide, Nereistoxin analoge Insektizide, Nicotinoidinsektizide wie Nitroguanidinnicotinoidinsektizide oder Pyridylmethylaminnicotinoidinsektizide, Organophosphorinsektizide wie Organophosphatinsektizide oder Organothiophosphatinsektizide oder Phosphonatinsektizide oder Phosphoramidothioatinsektizide, Oxadiazininsektizide, Pyrazolinsektizide, Pyrethroidinsektizide wie Pyrethroidesterinsektizide oder Pyrethroidetherinsektizide oder Pyrethroidoximinsektizide, Tetramsäureinsektizide, Tetrahydrofurandioninsektizide, Thiazolinsektizide.

Besonders bevorzugt wird das eine oder werden die mehreren Pestizide der Komponente a) der erfindungsgemäßen Suspensionskonzentrate ausgewählt aus der Gruppe bestehend aus Triazolfungiziden, Strobilurinfungiziden, Neonicotinoidinsektiziden, Phenylpyrazolinsektiziden, Benzoylcyclohexanedionherbiziden, Triazinherbiziden und Sulfonylharnstoffherbiziden.

Insbesondere bevorzugt wird das eine oder werden die mehreren Pestizide der Komponente a) der erfindungsgemäßen Suspensionskonzentrate ausgewählt aus der Gruppe bestehend aus Epoxiconazol, Tebuconazol, Azoxystrobin, Trifloxystrobin, Imidacloprid, Thiacloprid, Thiamethoxam, Fipronil, Ethiprol, Mesotrion, Tembotrion, Atrazin, Nicosulfuron, lodosulfuron und Mesosulfuron.

Im Rahmen der vorliegenden Erfindung werden die Copolymere der Formel (CP₁), worin P für H steht, als nicht-ionische Copolymere bezeichnet, und die Copolymere der Formel (CP₁), worin P eine andere Bedeutung als H besitzt, als anionische Copolymere bezeichnet.

Die nicht-ionischen Copolymere der Formel (CP₁), worin P für H steht, werden durch radikalische Polymerisation von Monomeren (A), (B) und (C) entsprechend den in den Klammern [ ]_{c}, [ ]_{b} und [ ]ₐ beschriebenen Struktureinheiten hergestellt. Die Herstellung der nicht-ionischen Copolymere der Formel (CP₁), worin P für H steht, ist in WO 2008/138485 A1 beschrieben. Zur Herstellung der anionischen Copolymere der Formel (CP₁), worin P eine andere Bedeutung als H besitzt, werden zunächst die nicht-ionischen Copolymere der Formel (CP₁), worin P für H steht, hergestellt und die erhaltenen nicht-ionischen Copolymere anschließend nach dem Fachmann bekannten Methoden zu den entsprechenden anionischen Copolymeren der Formel (CP₁), worin P eine andere Bedeutung als H besitzt, umgesetzt. Die Herstellung der anionischen Copolymere der Formel (CP₁), worin P eine andere Bedeutung als H besitzt, ist in WO 2008/138486 A1 beschrieben.

Der molare Anteil der Monomere, bezogen auf die Gesamtmenge der zur Herstellung der Copolymere b) verwendeten Monomere (A), (B) und (C), beträgt 1 bis 80 % für das Monomer (A), 0,1 bis 80 % für das Monomer (B), und 0,1 bis 80 % für das Monomer (C). Bevorzugt liegt der molare Anteil der Monomere, bezogen auf die Gesamtmenge der zur Herstellung der Copolymere b) verwendeten Monomere (A), (B) und (C), bei 10 bis 70 % für Monomer (A), bei 10 bis 60 % für Monomer (B) und bei 10 bis 60 % für Monomer (C).

Die Monomere (A) lassen sich durch die Formel (I) beschreiben: 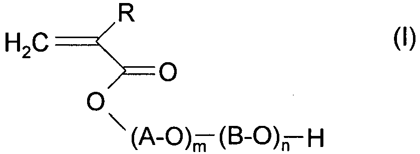 wobei
A für C₂- bis C₄-Alkylen und
B für ein von A unterschiedliches C₂- bis C₄-Alkylen steht,
R für Wasserstoff oder Methyl steht,
m eine Zahl von 1 bis 500, vorzugsweise 1 bis 50, ist,
n eine Zahl von 1 bis 500, vorzugsweise 1 bis 50, ist, und
   wobei die Summe m + n gleich 2 bis 1000 ist.

Die Alkylenoxyeinheiten (A-O)ₘ und (B-O)ₙ können entweder blockartig oder statistisch angeordnet vorliegen. Vorzugsweise liegen die Alkylenoxyeinheiten (A-O)ₘ und (B-O)ₙ blockartig angeordnet vor.

In einer bevorzugten Ausführungsform der Erfindung steht (A-O)ₘ für Propylenoxy-Einheiten und (B-O)ₙ für Ethylenoxy-Einheiten, oder (A-O)ₘ für Ethylenoxy-Einheiten und (B-O)ₙ für Propylenoxy-Einheiten, wobei der molare Anteil der Ethylenoxy-Einheiten vorzugsweise 50 bis 98 %, besonders bevorzugt 60 bis 95 % und insbesondere bevorzugt 70 bis 95 %, bezogen auf die Summe (100 %) der Ethylenoxy- und Propylenoxy-Einheiten, beträgt.

Die Summe der Alkylenoxyeinheiten n + m ist eine Zahl von 2 bis 1000, bevorzugt von 2 bis 500, besonders bevorzugt von 2 bis 100 und insbesondere bevorzugt von 5 bis 100.

Die Monomere (B) lassen sich durch die Formel (IIa) beschreiben: 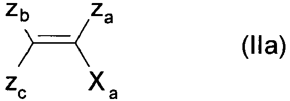 wobei
Xₐ für einen aromatischen oder araliphatischen Rest mit 3 bis 30, vorzugsweise 6 bis 30 und besonders bevorzugt 6 bis 20 C-Atomen steht, der gegebenenfalls eines oder mehrere der Heteroatome N, O und S enthält,
zₐ für H oder (C₁-C₄)-Alkyl steht,
z_{b} für H oder (C₁-C₄)-Alkyl steht, und
z_{c} für H oder (C₁-C₄)-Alkyl steht.

Zu den Monomeren (B) der Formel (IIa) gehören beispielsweise vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol. Vorzugsweise ist das Monomer (B) der Formel (IIa) Styrol, d. h. zₐ, z_{b} und z_{c} sind vorzugsweise H und Xₐ ist vorzugsweise Phenyl.

In einer besonders bevorzugten Ausführungsform der Erfindung sind die Monomere (B) ausgewählt aus: Styrol und 1-Vinylimidazol.

Die Monomere (C) lassen sich durch die Formel (III) beschreiben: 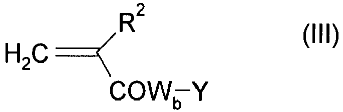 wobei
R² für Wasserstoff oder Methyl steht,
Y für einen aliphatischen Kohlenwasserstoffrest mit 6 bis 30 und bevorzugt mit 9 bis 20 C-Atomen, steht, der linear oder verzweigt, oder auch cyclisch sein kann, und die Heteroatome O, N und/oder S enthalten kann und auch ungesättigt sein kann, und
W_{b} für Sauerstoff oder die Gruppe NH steht.

Zu den Monomeren (C) gehören beispielsweise die folgenden Ester und Amide der Acrylsäure und Methacrylsäure: Hexyl-, 2-Ethylhexyl-, 3,3-Dimethylbutyl-, Heptyl-, Octyl-, Isooctyl-, Nonyl-, Lauryl-, Myristyl-, Cetyl-, Octadecyl- bzw. Stearyl-, Behenyl-, Cyclohexyl-, Trimethylcyclohexyl-, tert.-Butylcyclohexyl-, Bornyl-, Isobornyl-, Adamantyl-, (2,2-Dimethyl-1-methyl)propyl-, und 4-Ethylcyclohexyl-.

Bevorzugte Monomere (C) sind die folgenden Alkyl-Ester bzw. Alkyl-Amide der Acrylsäure und Methacrylsäure: 2-Ethylhexyl-, Lauryl-, Myristyl-, Octadecyl- und besonders bevorzugt 2-Ethylhexyl- und Lauryl-.

In einer bevorzugten Ausführungsform der Erfindung handelt es sich bei dem einen oder den mehreren Copolymeren b) um Copolymere der Formel (CP₁), worin P für H steht.

In einer weiteren bevorzugten Ausführungsform der Erfindung handelt es sich bei dem einen oder den mehreren Copolymeren b) um Copolymere der Formel (CP₁), worin P eine andere Bedeutung als H besitzt.

Die Copolymere (CP₁) besitzen vorzugsweise ein Molekulargewicht von 10³ bis 10⁹ g/mol, besonders bevorzugt von 10³ bis 10⁷ g/mol und insbesondere bevorzugt von 10³ bis 10⁵ g/mol. Sie besitzen übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.

Die in den Klammern [ ]_{c}, [ ]_{b} und [ ]ₐ beschriebenen Struktureinheiten können in dem einen oder den mehreren Copolymeren b) beispielsweise blockartig, statistisch, gradientenartig oder alternierend angeordnet vorliegen und liegen vorzugsweise statistisch angeordnet vor.

Die erfindungsgemäßen Suspensionskonzentrate enthalten das eine oder die mehreren Pestizide vorzugsweise in einer Menge von 1 bis 80 Gew.-%, besonders bevorzugt in einer Menge von 5 bis 70 Gew.-% und insbesondere bevorzugt in einer Menge von 10 bis 60 Gew.-%. Diese Mengen sind auf die Gesamtmasse des entsprechenden erfindungsgemäßen Suspensionskonzentrats bezogen.

Die Menge des einen oder der mehreren Copoylmere der Formel (CP₁) in den erfindungsgemäßen Suspensionskonzentraten beträgt vorzugsweise von 0,05 bis 10 Gew.-%, besonders bevorzugt von 0,1 bis 5 Gew.-% und insbesondere bevorzugt von 0,2 bis 5 Gew.-%. Diese Mengen sind auf die Gesamtmasse des entsprechenden erfindungsgemäßen Suspensionskonzentrats bezogen.

Sofern die erfindungsgemäßen Suspensionskonzentrate ein oder mehrere Hilfsstoffe c) enthalten, beträgt ihre Menge in den erfindungsgemäßen Suspensionskonzentraten vorzugsweise von 1 bis 50 Gew.-%, besonders bevorzugt von 2 bis 40 Gew.-% und insbesondere bevorzugt von 4 bis 30 Gew.-%. Diese Mengen sind auf die Gesamtmasse des entsprechenden erfindungsgemäßen Suspensionskonzentrats bezogen.

Die erfindungsgemäßen Suspensionskonzentrate enthalten ein oder mehrere Lösemittel d). Sie können beispielsweise Wasser als alleiniges Lösemittel, ein oder mehrere organische Lösemittel allein wie beispielsweise ein oder mehrere nicht mit Wasser mischbare Lösemittel oder auch Kombinationen aus Wasser und einem oder mehreren organischen Lösemitteln wie beispielsweise Kombinationen aus Wasser und einem oder mehreren nicht mit Wasser mischbaren Lösemitteln enthalten.

In einer bevorzugten Ausführungsform der Erfindung liegt das eine oder liegen die mehreren Lösemittel d) in den erfindungsgemäßen Suspensionskonzentraten enthaltend die Komponenten a), b) und c) und gegebenenfalls zusätzlich ein oder mehrere von den Pestiziden a) unterschiedliche wasserlösliche Pestizide mit einer Löslichkeit in Wasser von mehr als 50 g/l bei Raumtemperatur (Pestizide a2)) in einer Menge ad 100 % vor.

In einer weiteren bevorzugten Ausführungsform der Erfindung beträgt die Menge des einen oder der mehreren Lösemittel d) in den erfindungsgemäßen Suspensionskonzentraten vorzugsweise von 10 bis 90 Gew.-%, besonders bevorzugt von 20 bis 85 Gew.-% und insbesondere bevorzugt von 30 bis 80 Gew.-%. Diese Mengen sind auf die Gesamtmasse des entsprechenden erfindungsgemäßen Suspensionskonzentrats bezogen.

Sofern die erfindungsgemäßen Suspensionskonzentrate Wasser und zusätzlich ein oder mehrere organische Lösemittel wie beispielsweise ein oder mehrere nicht mit Wasser mischbare Lösemittel enthalten, ist das Gewichtsverhältnis von Wasser zu dem einen oder den mehreren organischen Lösemitteln wie beispielsweise dem einen oder den mehreren nicht mit Wasser mischbaren Lösemitteln von 50 : 1 bis 1 : 50, besonders bevorzugt von 20 : 1 bis 1 : 20 und insbesondere bevorzugt von 10 : 1 bis 1 : 10.

Neben der Verwendung in Suspensionskonzentraten können die Copolymere der Formel (CP₁) auch in Festformulierungen von Pestiziden wie WGs ("Wettable Granules", wasserdispergierbare Granulate) und WPs ("Wettable Powders", wasserdispergierbare Pulver) verwendet werden.

Bei den in den erfindungsgemäßen Suspensionskonzentraten gegebenenfalls enthaltenen Hilfsstoffen c) kann es sich um weitere Dispergiermittel, Netzmittel, Emulgatoren, Verdickungsmittel, Konservierungsmittel, Adjuvants, Penetrationsförderer, Kältestabilisatoren, Farbmittel, Entschäumer und Antioxidantien handeln.

Als weitere Dispergiermittel und Netzmittel eignen sich alle üblicherweise für diesen Zweck in agrochemischen Formulierungen einsetzbaren Substanzen, wie nichtionische, amphotere, kationische und anionische (polymere) Tenside.

Bevorzugt als weitere Dispergiermittel und Netzmittel sind Fettalkoholethoxylate, Fettalkoholalkoxylate, EO/PO-Blockcopolymere (EO: Ethylenoxy-Einheit; PO: Propylenoxy-Einheit), Alkylarylsufonsäuren, Alkylsulfonsäuren, Sulfonsäuren ethoxylierter Alkohole, Sulfosuccinate, Fettsäuremethyltauride, Tristyrylphenolethoxylate und -alkoxylate, Tri-sec-butylphenolethoxylate, sulfatierte Cresol-Formaldehyd Kondensationsprodukte, sulfatierte Kondensationsprodukte von Naphthalin und Alkylnaphthalinen, Ligninsulfonate, Phosphorsäureester von ethoxylierten Fettalkoholen, Tristyrylphenolen und Tri-sec-butylphenolen sowie Ethersulfate von ethoxylierten Fettalkoholen, Tristyrylphenolen und Tri-sec-butylphenolen und polymere Dispergiermittel.

Als Emulgatoren eignen sich nicht-ionische und anionische Emulgatoren wie Ethoxylate oder Alkoxylate von langkettigen (C₈ bis C₂₄) linearen oder verzweigten Alkoholen, EO/PO-Blockcopolymere (EO: Ethylenoxy-Einheit; PO: Propylenoxy-Einheit), Alkylphenol- oder Tristyrylphenolethoxylate und -alkoxylate, Tri-sec-butylphenolethoxylate, Rizinusölethoxylate, Ester von langkettigen Carbonsäuren mit ein- oder mehrwertigen Alkoholen sowie deren Ethoxylierungsprodukte, Salze der Dodecylbenzolsulfonsäure, Sulfosuccinate, Phosphorsäureester von ethoxylierten Fettalkoholen, Tristyrylphenolen und Tri-sec-butylphenolen und deren Salze.

Als Verdickungsmittel können alle üblicherweise für diesen Zweck in agrochemischen Formulierungen einsetzbaren Substanzen wie Xanthan gum und/oder Cellulose, beispielsweise Carboxy-, Methyl-, Ethyl- oder Propylcellulose, (gegebenenfalls modifizierte) Bentonite bzw. Siliziumdioxid oder verdickende Polymere oder Copolymere eingesetzt werden.

Als Konservierungsmittel können alle üblicherweise für diesen Zweck in agrochemischen Formulierungen einsetzbaren Substanzen wie organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, schwefelige Säure und deren Salze eingesetzt werden.

Als Adjuvants können alle üblicherweise für diesen Zweck in agrochemischen Formulierungen einsetzbaren Substanzen wie gegebenenfalls vernetzte Polyglycerinester, Alkoholalkoxylate wie z. B. Alkoholethoxylate, Alkylpolysacharide, Fettaminethoxylate, Ester der phosphorigen Säure oder der Phosphorsäure wie Ethylhexylphosphonsäure-bis(ethylhexyl)ester oder Tris(ethylhexyl)phosphat, Sorbitan- und Sorbitolethoxylatderivate eingesetzt werden.

Als Penetrationsförderer eignen sich alle Substanzen, die üblicherweise eingesetzt werden, um das Eindringen von Pestiziden in Pflanzen oder in Zielorganismen zu verbessern. Penetrationsförderer können beispielsweise dadurch definiert werden, dass sie aus der wässrigen Spritzbrühe und/oder aus einem Spritzbelag auf der Pflanzenoberfläche in die Kutikula der Pflanze eindringen und dadurch die Stoffbeweglichkeit (Mobilität) von Wirkstoffen in der Kutikula erhöhen können. Die in der Literatur beschriebene Methode kann zur Bestimmung dieser Eigenschaft eingesetzt werden (Baur et al., 1997, Pesticide Science 51, 131-152).

Als Kältestabilisatoren können alle üblicherweise für diesen Zweck in agrochemischen Formulierungen einsetzbaren Stoffe fungieren. Beispielhaft seien Harnstoff, Glycerin und Propylenglykol genannt. Geeignete Farbmittel sind alle üblicherweise für diesen Zweck in agrochemischen Formulierungen einsetzbaren Substanzen wie wasser- oder öllösliche Farbstoffe, sowie organische oder anorganische Pigmente. Als Entschäumer eignen sich alle üblicherweise für diesen Zweck in agrochemischen Formulierungen einsetzbaren Substanzen, wie Fettsäurealkylesteralkoxylate; Organopolysiloxane wie Polydimethylsiloxane und deren Gemische mit mikrofeiner, gegebenenfalls silanierter Kieselsäure; Perfluoralkylphosphonate und -phosphinate; Paraffine; Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder oder Wachsen. Als Antioxidantien kommen alle üblicherweise für diesen Zweck in agrochemischen Formulierungen einsetzbaren Substanzen in Betracht, wie beispielsweise BHT (2,6-Di-tert.-butyl-4-methylphenol).

Die erfindungsgemäßen Suspensionskonzentrate enthalten vorzugsweise ein oder mehrere Hilfsstoffe der Komponente c).

Unter Suspensionkonzentraten im Rahmen dieser Erfindung sollen alle Dispersionen von Pestiziden verstanden werden, unabhängig davon, ob allein Wasser als Lösemittel, ein organisches Lösemittel allein oder Kombinationen aus beiden Lösemitteln, d. h. aus Wasser und einem organischen Lösemittel, enthalten sind.

Im engeren Sinne werden unter Suspensionskonzentraten oft nur wässrige Dispersionen von Pestiziden verstanden. Diese werden im Englischen als "Suspension Concentrate" bezeichnet und üblicherweise mit dem Kürzel "SC" abgekürzt.

In einer weiteren bevorzugten Ausführungsform der Erfindung enthalten die erfindungsgemäßen Suspensionskonzentrate daher
a) ein oder mehrere bei Raumtemperatur feste Pestizide und
b) ein oder mehrere Copolymere ausgewählt aus der Gruppe bestehend aus Copolymeren der Formel (CP₁) und
c) gegebenenfalls ein oder mehrere weitere Hilfsstoffe und
d) Wasser als alleiniges Lösemittel.

Besonders anspruchsvoll ist die Herstellung stabiler wässriger Suspensionskonzentrate, wenn neben dem in Wasser dispergierten (wasserunlöslichen) Pestizid ein oder mehrere weitere wasserlösliche Pestizide enthalten sind. Diese wasserlöslichen Pestizide (wie Glyphosat) besitzen Salzcharakter, was bei den üblicherweise verwendeten Dispergiermitteln zu Problemen führt, was sich durch Verdicken des Suspensionskonzentrates oder Trennung in mehrere Phasen bzw. Ausfällungen äußert. Überraschenderweise eignen sich die Copoylmere (CP₁) auch besonders gut zur Herstellung von Suspensionskonzentraten, die neben dem einen oder mehreren bei Raumtemperatur festen dispergierten Pestiziden noch ein oder mehrere in Wasser lösliche salzartige Pestizide enthalten.

In einer weiteren bevorzugten Ausführungsform der Erfindung enthalten die erfindungsgemäßen Suspensionskonzentrate daher
a) ein oder mehrere bei Raumtemperatur feste Pestizide und
a2) ein oder mehrere von den Pestiziden a) unterschiedliche wasserlösliche Pestizide mit einer Löslichkeit in Wasser von mehr als 50 g/l bei Raumtemperatur und
b) ein oder mehrere Copolymere ausgewählt aus der Gruppe bestehend aus Copolymeren der Formel (CP₁) und
c) gegebenenfalls ein oder mehrere weitere Hilfsstoffe und
d) Wasser als alleiniges Lösemittel.

Besonders bevorzugt wird das eine oder werden die mehreren wasserlöslichen Pestizide a2) ausgewählt aus wasserlöslichen Salzen von Herbiziden und insbesondere bevorzugt werden sie ausgewählt aus der Gruppe bestehend aus wasserlöslichen Salzen von N-Phosponomethylglycin (Glyphosat), Glufosinat, 2,4-D, Dicamba, Bentazon und MCPA.

Sofern die erfindungsgemäßen Suspensionskonzentrate ein oder mehrere wasserlösliche Pestizide a2) mit einer Löslichkeit in Wasser von mehr als 50 g/l bei Raumtemperatur enthalten, beträgt ihre Menge in den erfindungsgemäßen Suspensionskonzentraten vorzugsweise von 0,1 bis 50 Gew.-%, besonders bevorzugt von 1 bis 40 Gew.-% und insbesondere bevorzugt von 5 bis 30 Gew.-%. Diese Mengen sind auf die Gesamtmasse des entsprechenden erfindungsgemäßen Suspensionskonzentrats bezogen.

Neben den wässrigen existieren auch wasserfreie Suspensionskonzentrate. Diese sind auch unter dem Namen Öldispersionen (im englischen "Oil Dispersion" und mit dem Kürzel "OD" abgekürzt) bekannt. In Öldispersion sind die Pestizide in einem nicht mit Wasser mischbaren Lösemittel (dem "Öl") dispergiert. Bei dem Öl muss es sich jedoch nicht um ein Öl im klassischen Sinne (wie ein Mineralöl oder Pflanzenöl handeln). Vielmehr wird darunter jedes nicht mit Wasser mischbare Lösemittel verstanden. Diese Zubereitungsform eignet sich beispielsweise besonders für hydrolyseempfindliche Wirkstoffe, wie beispielsweise Sulfonylharnstoffherbizide, die sich in Gegenwart von Wasser mit der Zeit zersetzen. Daneben besitzen Öldispersionen den Vorteil, dass sie sich oft durch eine höhere biologische Wirksamkeit auszeichnen. Auch bestimmte Neonicotinoidinsektizide werden daher häufiger als Öldispersion formuliert.

In einer weiteren bevorzugten Ausführungsform der Erfindung enthalten die erfindungsgemäßen Suspensionskonzentrate daher
a) ein oder mehrere bei Raumtemperatur feste Pestizide und
b) ein oder mehrere Copolymere ausgewählt aus der Gruppe bestehend aus Copolymeren der Formel (CP₁) und
c) gegebenenfalls ein oder mehrere weitere Hilfsstoffe und
d) ein oder mehrere nicht mit Wasser mischbare Lösemittel,
und sind dadurch gekennzeichnet, dass sie entweder kein Wasser enthalten oder Wasser in einer Menge kleiner oder gleich 1,0 Gew.-% enthalten, bezogen auf das Gesamtgewicht des jeweiligen Suspensionskonzentrats.

Unter "wasserfrei" werden im Rahmen der vorliegenden Erfindung Suspensionskonzentrate verstanden, die entweder kein Wasser oder Wasser in einer Menge kleiner oder gleich 1,0 Gew.-% enthalten, bezogen auf das Gesamtgewicht des jeweiligen Suspensionskonzentrats. Vorzugsweise enthalten die erfindungsgemäßen wasserfreien Suspensionskonzentrate weniger als 0,5 Gew.-% Wasser, bezogen auf das Gesamtgewicht des jeweiligen Suspensionskonzentrats. Diese Wassergehalte resultieren üblicherweise aus Restmengen Wasser, die in den verwendeten Lösemitteln oder Hilfsstoffen enthalten sind oder werden im Zuge der Herstellung der Zusammensetzungen als Verunreinigung während des Prozesses mit eingebracht.

Unter nicht mit Wasser mischbaren Lösemitteln im Sinne dieser Erfindung werden Lösemittel verstanden, die bei Raumtemperatur eine Löslichkeit von maximal 5 Gew.-%, bevorzugt von maximal 1 Gew.-% in Wasser aufweisen.

Beispiele für solche Lösemittel sind Alkane, aromatische Kohlenwasserstoffe, Solvent Naphtha, Alkohole, Ester, Ketone, Amide, Ether, Phosphor- und Phosphonsäureester, pflanzliche Öle, Mineralöle, Alkylester von Fettsäuren pflanzlichen oder tierischen Ursprungs.

Bevorzugt handelt es sich um Solvent Naphtha, Fettsäureamide, pflanzliche Öle, Mineralöle sowie kurzkettige Ester von Fettsäuren pflanzlichen oder tierischen Ursprungs.

Darüber hinaus existieren auch Suspensiortskonzentrate, die sowohl Wasser als auch nicht mit Wasser mischbare Lösemittel enthalten. Diese werden als Suspo-Emulsion (SE) bezeichnet. Dabei kann lediglich die wässrige Phase mindestens ein Pestizid in dispergierter Form enthalten. In der nicht-wässrigen Phase befinden sich dann das nicht mit Wasser mischbare Lösemittel sowie Hilfsmittel (wie beispielsweise Emulgatoren). Oftmals enthalten Suspo-Emulsionen aber mindestens ein Pestizid sowohl in der wässrigen als auch in der nicht-wässrigen Phase. Dann liegt mindestens ein schwer lösliches Pestizid in dispergierter Form in der wässrigen Phase und mindestens ein im Lösemittel lösliches Pestizid in gelöster Form in der Lösemittelphase des nicht mit Wasser mischbaren Lösemittels vor.

In einer weiteren bevorzugten Ausführungsform der Erfindung enthalten die erfindungsgemäßen Suspensionskonzentrate daher
a) ein oder mehrere bei Raumtemperatur feste Pestizide und
b) ein oder mehrere Copolymere ausgewählt aus der Gruppe bestehend aus Copolymeren der Formel (CP₁) und
c) gegebenenfalls ein oder mehrere weitere Hilfsstoffe und
d) Wasser und ein oder mehrere nicht mit Wasser mischbare Lösemittel.

Bevorzugte Hilfsstoffe c) im Sinne dieser Erfindung sind Copolymere, wie sie in EP 1 379 129 B1 beschrieben werden. Diese Hilfsmittel haben den Vorteil, dass sie sowohl netzend wie dispergierend wirken und zusätzlich als Adjuvant fungieren können.

In einer weiteren bevorzugten Ausführungsform der Erfindung enthalten die erfindungsgemäßen Suspensionskonzentrate daher
a) ein oder mehrere bei Raumtemperatur feste Pestizide und
b) ein oder mehrere Copolymere ausgewählt aus der Gruppe bestehend aus Copolymeren der Formel (CP₁) und
c) ein oder mehrere Copolymere erhältlich durch Copolymerisation von Glycerin, mindestens einer Dicarbonsäure und mindestens einer Monocarbonsäure und
   gegebenenfalls ein oder mehrere von diesen Copolymeren verschiedene weitere Hilfsstoffe und
d) ein oder mehrere Lösemittel.

Bevorzugt handelt es sich bei den soeben genannten Copolymeren um Copolymere erhältlich durch Copolymerisation von
alpha) 19,9 bis 99 Gew.-% Glycerin und
beta) 0,1 bis 30 Gew.-% mindestens einer Dicarbonsäure und
gamma) 0,9 bis 80 Gew.-% mindestens einer Monocarbonsäure gemäß Formel (I)

   R¹-COOH (I)

   wobei R¹ (C₅-C₂₉)-Alkyl; (C₇-C₂₉)-Alkenyl; Phenyl oder Naphthyl bedeutet.

Vorzugsweise handelt es sich bei der Dicarbonsäure beta) um Oxalsäure; eine Dicarbonsäure gemäß Formel (II)

HOOC-R²-COOH (II)

und/oder eine Dicarbonsäure gemäß Formel (III) 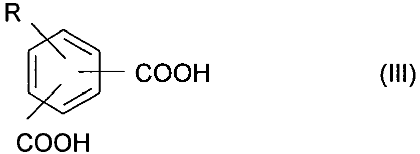 wobei R² eine (C₁-C₄₀)-Alkylen-Brücke oder eine (C₂-C₂₀)-Alkenylen-Brücke darstellt und R H, (C₁-C₂₀)-Alkyl, (C₂-C₂₀)-Alkenyl, Phenyl, Benzyl, Halogen, -NO₂, (C₁-C₆)-Alkoxy, -CHO oder -CO((C₁-C₆)-Alkyl) ist.

In einer besonders bevorzugten Ausführungsform der Erfindung handelt es sich bei der Dicarbonsäure beta) um Phthalsäure und bei der Monocarbonsäure gamma) um Cocosfettsäure.

Sofern die erfindungsgemäßen Suspensionskonzentrate ein oder mehrere Copolymere erhältlich durch Copolymerisation von Glycerin, mindestens einer Dicarbonsäure und mindestens einer Monocarbonsäure enthalten, beträgt ihre Menge in den erfindungsgemäßen Suspensionskonzentraten vorzugsweise von 0,1 bis 25 Gew.-%, besonders bevorzugt von 0,5 bis 20 Gew.-% und insbesondere bevorzugt von 1 bis 15 Gew.-%. Diese Mengen sind auf die Gesamtmasse des entsprechenden erfindungsgemäßen Suspensionskonzentrats bezogen.

Die Herstellung von wässrigen und nicht-wässrigen Suspensionskonzentraten sowie von Suspo-Emulsionen ist dem Fachmann hinlänglich bekannt.

Die erfindungsgemäßen Suspensionskonzentrate sind in vorteilhafter Weise zur Verwendung als Pflanzenschutzmittel geeignet.

Ein weiterer Gegenstand der vorliegenden Erfindung betrifft daher die Verwendung eines erfindungsgemäßen Suspensionskonzentrats als Pflanzenschutzmittel.

### Beispiele:

Im Folgenden wird die Erfindung anhand von Beispielen verdeutlicht, die jedoch keinesfalls als Einschränkung anzusehen sind.

Bei den eingesetzten Handelsprodukten handelt es sich um:

| | |
|---|---|
| Calsogen^{®} AR 100: | verzweigtes Ca-Dodecylbenzylsulfonat in Solvesso^{®} 200 der Firma Clariant (50 Gew.-%ig) |
| Dispersogen^{®} LFS: | Triethanolammoniumsalz eines ethoxylierten TSP-Phosphats der Firma Clariant (96 Gew.-%ig); TSP: Tristyrylphenol |
| Dispersogen^{®} 1494: | sulfatiertes Cresol-Formaldehyd-Kondensationsprodukt der Firma Clariant (35 Gew.-%ig in Wasser) |
| Emulsogen^{®} SF 8: | Natriumdioctylsulfosuccinat der Firma Clariant (50 Gew.-%ig in Wasser) |
| Emulsogen^{®} TS 200: | ethoxyliertes Tristyrylphenol (20 EO) der Firma Clariant |
| Genapol^{®} PF 40: | Ethylenoxid/Propylenoxid-Copolymer der Firma Clariant |
| Genapol^{®} T 150: | C_{16/18}-Fettalkoholethoxylat (15 EO) der Firma Clariant |
| Hostapon^{®} TPHC: | Natriumsalz eines Fettsäuremethyltaurids der Firma Clariant (63 Gew.-%ig) |
| Kelzan^{®} S: | Xantham Gum der Firma CP Kelco (Verdicker) |
| Sapogenat^{®} T 060: | ethoxyliertes Tri-(sek.-butyl)phenol (6 EO) der Firma Clariant |
| Silfoam^{®} SE 57: | Siliconentschäumer der Firma Wacker-Chemie |
| Sovlesso^{®}200 ND: | aromatisches Kohlenwasserstoffgemisch der Firma Exxon |

Allgemeine Methode zur Herstellung von Suspensionskonzentraten:

Alle Komponenten (außer der Kelzan^{®} S-Lösung) werden mit einem Dissolver vordispergiert. Die anschließende Feinmahlung erfolgt in einer Perlmühle, bis die gewünschte Teilchengröße erreicht ist. Im Anschluss wird die wässrige Kelzan^{®} S-Lösung zugegeben und auf die gewünschte Endviskosität eingestellt. Im Falle der Suspo-Emulsion wird das nicht mit Wasser mischbare Lösemittel zusammen mit Emulgator und Wasser getrennt von der wässrigen Pestizid-Suspension voremulgiert und ebenfalls erst nach dem Dispergierschritt zugegeben. Im Falle der Atrazin-Glyphosat-Kombi-Formulierung wird zunächst nur das wässrige Suspensionskonzentrat des Atrazins hergestellt und anschließend mit der wässrigen Glyphosat-Lösung vermischt.

### Beispiel 1: Suspensionskonzentrat mit Atrazin (Atrazin 500 SC)

| | |
|---|---|
| 202,0 g | Atrazin (99 Gew.-%ig) |
| 2,6 g | Copolymer (hergestellt nach Synthesebeispiel 3 aus WO 2008/138485 A1) |
| 6,1 g | Emulsogen^{®} SF 8 |
| 24,0 g | Propylenglykol |
| 2,0 g | Silfoam^{®} SE 57 |
| 32,0 g | Kelzan^{®}S (2 Gew.-%ige Lösung in Wasser) |
| 183,3 g | de-ionisiertes Wasser |

### Beispiel 2: Suspensionskonzentrat mit Atrazin (Atrazin 500 SC)

| | |
|---|---|
| 202,0 g | Atrazin (99 Gew.-%ig) |
| 1,8 g | Copolymer (hergestellt nach Synthesebeispiel 19 aus WO 2008/138486 A1) |
| 12,7 g | Copolymer (hergestellt nach der Vorschrift für Copolymer II aus EP 1 379 129 B1) |
| 20,0 g | Propylenglykol |
| 2,4 g | Silfoam^{®} SE 57 |
| 34,0 g | Kelzan^{®} S (2 Gew.-%ige Lösung in Wasser) |
| 178,0 g | de-ionisiertes Wasser |

### Beispiel 3: Suspensionskonzentrat mit Azoxystrobin (Azoxystrobin 250 SC)

| | |
|---|---|
| 128,2 g | Azoxystrobin (97 Gew.-%ig) |
| 2,7 g | Copolymer (hergestellt nach Synthesebeispiel 3 aus WO 2008/138485 A1) |
| 21,9 g | Copolymer (hergestellt nach der Vorschrift für Copolymer II aus EP 1 379 129 B1) |
| 27,0 g | Genapol^{®} T 150 |
| 30,0 g | Propylenglykol |
| 3,5 g | Silfoam^{®} SE 57 |
| 50,0 g | Kelzan^{®} S (2 Gew.-%ige Lösung in Wasser) |
| 276,0 g | de-ionisiertes Wasser |

### Beispiel 4: Suspensionskonzentrat mit Azoxystrobin (Azoxystrobin 250 SC)

| | |
|---|---|
| 128,2 g | Azoxystrobin (97 Gew.-%ig) |
| 3,5 g | Copolymer (hergestellt nach Synthesebeispiel 7 aus WO 2008/138485 A1) |
| 18,8 g | Hostapon^{®} TPHC |
| 10,8 g | Dispersogen^{®} LFS |
| 30,0 g | Propylenglykol |
| 3,5 g | Silfoam^{®} SE 57 |
| 50,0 g | Kelzan^{®} S (2 Gew.-%ige Lösung in Wasser) |
| 295,0 g | de-ionisiertes Wasser |

### Beispiel 5: Suspensionskonzentrat mit Imidacloprid (Imidacloprid 350 SC)

| | |
|---|---|
| 184,0 g | Imidacloprid (95 Gew.-%ig) |
| 9,2 g | Copolymer (hergestellt nach Synthesebeispiel 17 aus WO 2008/138486 A1) |
| 29,2 g | Emulsogen^{®} TS 200 |
| 11,0 g | Dispersogen^{®} 1494 |
| 30,0 g | Propylenglykol |
| 7,5 g | Silfoam^{®} SE 57 |
| 45,0 g | Kelzan^{®} S (2 Gew.-%ige Lösung in Wasser) |
| 315,0 g | de-ionisiertes Wasser |

### Beispiel 6: Suspensionskonzentrat mit Tebuconazol (Tebucoazol 430 SC)

| | |
|---|---|
| 221,6 g | Tebuconazol (97 Gew.-%ig) |
| 2,5 g | Copolymer (hergestellt nach Synthesebeispiel 3 aus WO 2008/138486 A1) |
| 8,7 g | Dispersogen^{®} LFS |
| 7,0 g | Genapol^{®} PF 40 |
| 30,0 g | Propylenglykol |
| 3,0 g | Silfoam^{®} SE 57 |
| 60,0 g | Kelzan^{®} S (2 Gew.-%ige Lösung in Wasser) |
| 250,0 g | de-ionisiertes Wasser |

### Beispiel 7: Suspo-Emulsion mit Epoxiconazol (Epoxiconazol 125 SE)

| | |
|---|---|
| 129,0 g | Epoxiconazol (97 Gew.-%ig) |
| 250,0 g | Sapogenat^{®} T 060 |
| 167,0 g | Solvesso^{®} 200 ND |
| 45,5 g | Calsogen^{®} AR 100 |
| 17,1 g | Copolymer (hergestellt nach Synthesebeispiel 19 aus WO 2008/138486 A1) |
| 30,0 g | Propylenglykol |
| 3,0 g | Silfoam^{®} SE 57 |
| 45,0 g | Kelzan^{®} S (2 Gew.-%ige Lösung in Wasser) |
| 365,0 g | de-ionisiertes Wasser |

### Beispiel 8: Suspensionskonzentrat mit einem wasserlöslichen Pestizid (Atrazin-Glyphosat-Kombi-Formulierung)

| | |
|---|---|
| 202,0 g | Atrazin (99 Gew.-%ig) |
| 4,8 g | Copolymer (hergestellt nach Synthesebeispiel 19 aus WO 2008/138486 A1) |
| 13,3 g | Copolymer (hergestellt nach der Vorschrift für Copolymer II aus EP 1 379 129 B1) |
| 20,0 g | Propylenglykol |
| 2,4 g | Silfoam^{®} SE 57 |
| 34,0 g | Kelzan^{®} S (2 Gew.-%ige Lösung in Wasser) |
| 159,6 g | Glyphosat-Isopropylammoniumsalz-Lösung (62 Gew.-%ig in Wasser) |
| 34,0 g | de-ionisiertes Wasser |

Die Suspendierbarkeit der hergestellten Suspensionskonzentrate aus den Beispielen 1 bis 8 wird gemäß CIPAC-Methode MT 184 durch Verdünnen auf 0,5 Gew.-% in 342 ppm CIPAC Standard-Wasser nach 30 Minuten bestimmt. Alle Suspensionskonzentrate weisen eine Suspendierbarkeit von > 80 % auf.

Die hergestellten Suspensionskonzentrate werden für 14 Tage bei Raumtemperatur (25 °C) gelagert, anschließend wird das Aussehen beurteilt. Alle Suspensionskonzentrate sind lagerstabil.

## Patentansprüche

1. Suspensionskonzentrat enthaltend
a) ein oder mehrere bei Raumtemperatur (25 °C) feste Pestizide
und
b) ein oder mehrere Copolymere ausgewählt aus der Gruppe bestehend aus Copolymeren der Formel (CP₁) 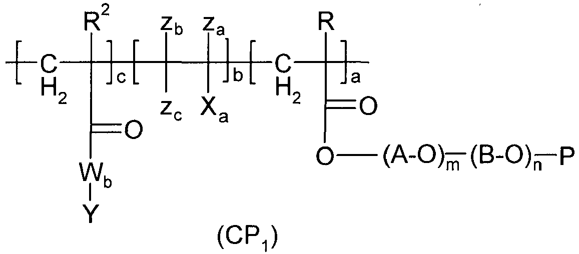 wobei
die Indices a, b und c den molaren Anteil der jeweiligen Struktureinheit angeben,
a 0,01 - 0,8 ist,
b 0,001 - 0,8 ist,
c 0,001 - 0,8 ist, und
die Summe aus a + b + c gleich 1 ist,
A für C₂-C₄-Alkylen steht,
B für ein von A unterschiedliches C₂-C₄-Alkylen steht,
R für Wasserstoff oder Methyl steht,
m eine Zahl von 1 bis 500 ist,
n eine Zahl von 1 bis 500 ist, und
die Summe m + n gleich 2 bis 1000 ist,
Xₐ für einen aromatischen oder araliphatischen Rest mit 3 bis 30 C-Atomen
steht, der gegebenenfalls eines oder mehrere der Heteroatome N, O und S enthält,
za für H oder (C₁-C₄)-Alkyl steht,
zb für H oder (C₁-C₄)-Alkyl steht,
zc für H oder (C₁-C₄)-Alkyl steht,
R² für Wasserstoff oder Methyl steht,
Y für einen aliphatischen Kohlenwasserstoffrest mit 6 bis 30 C-Atomen steht, der linear oder verzweigt, oder auch cyclisch sein kann, und die Heteroatome O, N und/oder S enthalten kann und auch ungesättigt sein kann,
W_{b} für Sauerstoff oder die Gruppe NH steht,
P für H, SO₃M, CH₂COOM, PO₃M₂, 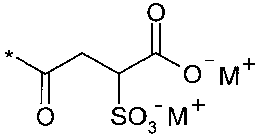 oder 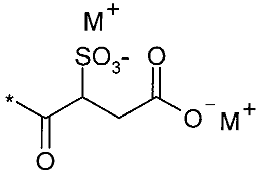 steht, und
M für H, ein einwertiges Metallkation, ein zweiwertiges Metallkation, NH₄⁺, ein sekundäres, tertiäres oder quartäres Ammoniumion, oder eine Kombination davon, oder für Äquivalente von zwei-, drei- oder mehrwertigen Metallionen steht,
und
c) gegebenenfalls ein oder mehrere weitere Hilfsstoffe
und
d) ein oder mehrere Lösemittel.

2. Suspensionskonzentrat gemäß Anspruch 1, **dadurch gekennzeichnet, dass** das eine oder die mehreren bei Raumtemperatur festen Pestizide der Komponente a) ausgewählt werden aus der Gruppe bestehend aus Triazolfungiziden, Strobilurinfungiziden, Neonicotinoidinsektiziden, Phenylpyrazolinsektiziden, Benzoylcyclohexanedionherbiziden, Triazinherbiziden und Sulfonylharnstoffherbiziden.

3. Suspensionskonzentrat gemäß Anspruch 2, **dadurch gekennzeichnet, dass** das eine oder die mehreren bei Raumtemperatur festen Pestizide der Komponente a) ausgewählt werden aus der Gruppe bestehend aus Epoxiconazol, Tebuconazol, Azoxystrobin, Trifloxystrobin, Imidacloprid, Thiacloprid, Thiamethoxam, Fipronil, Ethiprol, Mesotrion, Tembotrion, Atrazin, Nicosulfuron, lodosulfuron und Mesosulfuron.

4. Suspensionskonzentrat gemäß einem oder mehreren der Ansprüche 1 bis 3 enthaltend
a) ein oder mehrere bei Raumtemperatur feste Pestizide und
b) ein oder mehrere Copolymere ausgewählt aus der Gruppe bestehend aus Copolymeren der Formel (CP₁) und
c) gegebenenfalls ein oder mehrere weitere Hilfsstoffe und
d) Wasser als alleiniges Lösemittel.

5. Suspensionskonzentrat gemäß Anspruch 4 enthaltend
a) ein oder mehrere bei Raumtemperatur feste Pestizide und
a2) ein oder mehrere von den Pestiziden a) unterschiedliche wasserlösliche Pestizide mit einer Löslichkeit in Wasser von mehr als 50 g/l bei Raumtemperatur und
b) ein oder mehrere Copolymere ausgewählt aus der Gruppe bestehend aus Copolymeren der Formel (CP₁) und
c) gegebenenfalls ein oder mehrere weitere Hilfsstoffe und
d) Wasser als alleiniges Lösemittel.

6. Suspensionskonzentrat gemäß Anspruch 5, **dadurch gekennzeichnet, dass** das eine oder die mehreren wasserlöslichen Pestizide a2) ausgewählt werden aus wasserlöslichen Salzen von Herbiziden und vorzugsweise ausgewählt werden aus der
Gruppe bestehend aus wasserlöslichen Salzen von N-Phosponomethylglycin (Glyphosat), Glufosinat, 2,4-D, Dicamba, Bentazon und MCPA.

7. Suspensionskonzentrat gemäß einem oder mehreren der Ansprüche 1 bis 3 enthaltend
a) ein oder mehrere bei Raumtemperatur feste Pestizide und
b) ein oder mehrere Copolymere ausgewählt aus der Gruppe bestehend aus Copolymeren der Formel (CP₁) und
c) gegebenenfalls ein oder mehrere weitere Hilfsstoffe und
d) ein oder mehrere nicht mit Wasser mischbare Lösemittel,
**dadurch gekennzeichnet, dass** es entweder kein Wasser enthält oder Wasser in einer Menge kleiner oder gleich 1,0 Gew.-% enthält, bezogen auf das Gesamtgewicht des Suspensionskonzentrats.

8. Suspensionskonzentrat gemäß einem oder mehreren der Ansprüche 1 bis 3 enthaltend
a) ein oder mehrere bei Raumtemperatur feste Pestizide und
b) ein oder mehrere Copolymere ausgewählt aus der Gruppe bestehend aus Copolymeren der Formel (CP₁) und
c) gegebenenfalls ein oder mehrere weitere Hilfsstoffe und
d) Wasser und ein oder mehrere nicht mit Wasser mischbare Lösemittel.

9. Suspensionskonzentrat gemäß einem oder mehreren der Ansprüche 1 bis 8 enthaltend
a) ein oder mehrere bei Raumtemperatur feste Pestizide und
b) ein oder mehrere Copolymere ausgewählt aus der Gruppe bestehend aus Copolymeren der Formel (CP₁) und
c) ein oder mehrere Copolymere erhältlich durch Copolymerisation von Glycerin, mindestens einer Dicarbonsäure und mindestens einer Monocarbonsäure und
gegebenenfalls ein oder mehrere weitere Hilfsstoffe und
d) ein oder mehrere Lösemittel.

10. Verwendung eines Suspensionskonzentrates gemäß einem oder mehreren der Ansprüche 1 bis 9 als Pflanzenschutzmittel.

## Claims

1. A suspension concentrate comprising
a) one or more pesticides that are solid at room temperature (25°C) and
b) one or more copolymers selected from the group consisting of copolymers of the formula (CP₁) 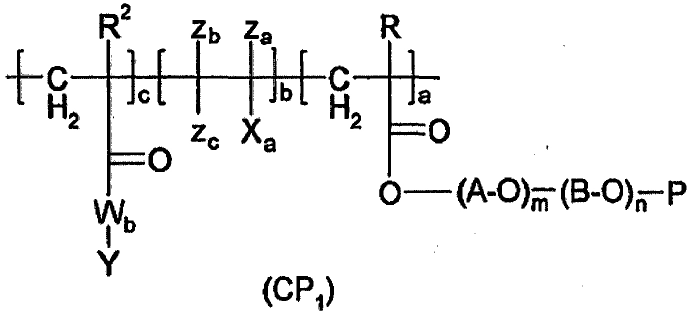 where
the indices a, b and c indicate the molar fraction of the respective structural unit,
a is 0.01-0.8,
b is 0.001-0.8,
c is 0.001-0.8, and
the sum of a + b + c is 1,
A is C₂-C₄-alkylene,
B is a C₂-C₄-alkylene different from A,
R is hydrogen or methyl,
m is a number from 1 to 500,
n is a number from 1 to 500, and
the sum m + n is 2 to 1000,
Xa is an aromatic or araliphatic radical having 3 to 30 carbon atoms which optionally contains one or more of the heteroatoms N, O and S,
zₐ is H or (C₁-C₄)-alkyl,
z_{b} is H or (C₁-C₄)-alkyl,
z_{c} is H or (C₁-C₄)-alkyl,
R² is hydrogen or methyl,
Y is an aliphatic hydrocarbon radical having 6 to 30 carbon atoms which can be linear or branched, or else cyclic, and can contain the heteroatoms O, N and/or S and can also be unsaturated,
W_{b} is oxygen or the group NH,
P is H, SO₃M, CH₂COOM, PO₃M₂, 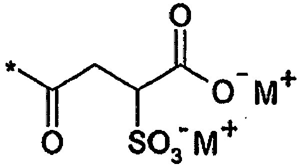 or 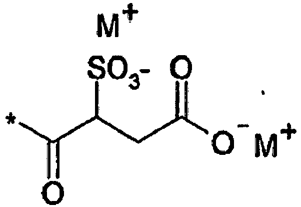 and
M is H, a monovalent metal cation, a divalent metal cation, NH₄⁺, a secondary, tertiary or quaternary ammonium ion, or a combination thereof, or equivalents of di-, tri- or polyvalent metal ions,
and
c) optionally one or more further auxiliaries
and
d) one or more solvents.

2. The suspension concentrate as claimed in claim 1, wherein the one or more pesticides of component a) that are solid at room temperature are selected from the group consisting of triazole fungicides, strobilurin fungicides, neonicotinoide insecticides, phenylpyrazole insecticides, benzoylcyclohexanedione herbicides, triazine herbicides and sulfonylurea herbicides.

3. The suspension concentrate as claimed in claim 2, wherein the one or more pesticides of component a) that are solid at room temperature are selected from the group consisting of epoxiconazole, tebuconazole, azoxystrobin, trifloxystrobin, imidacloprid, thiacloprid, thiamethoxam, fipronil, ethiprol, mesotrione, tembotrione, atrazine, nicosulfurone, iodosulfurone and mesosulfurone.

4. The suspension concentrate as claimed in one or more of claims 1 to 3, comprising
a) one or more pesticides that are solid at room temperature and
b) one or more copolymers selected from the group consisting of copolymers of the formula (CP₁) and
c) optionally one or more further auxiliaries and
d) water as the sole solvent.

5. The suspension concentrate as claimed in claim 4, comprising
a) one or more pesticides that are solid at room temperature and
a2) one or more water-soluble pesticides that are different from the pesticides a) and have a solubility in water of more than 50 g/l at room temperature and
b) one or more copolymers selected from the group consisting of copolymers of the formula (CP₁) and
c) optionally one or more further auxiliaries and
d) water as the sole solvent.

6. The suspension concentrate as claimed in claim 5, wherein the one or more water-soluble pesticides a2) are selected from water-soluble salts of herbicides and preferably selected from the group consisting of water-soluble salts of N-phosphonomethylglycine (glyphosate), glufosinate, 2,4-D, dicamba, bentazone and MCPA.

7. The suspension concentrate as claimed in one or more of claims 1 to 3, comprising
a) one or more pesticides that are solid at room temperature and
b) one or more copolymers selected from the group consisting of copolymers of the formula (CP₁) and
c) optionally one or more further auxiliaries and
d) one or more water-immiscible solvents,
wherein it comprises either no water or comprises water in an amount of less than or equal to 1.0% by weight, based on the total weight of the suspension concentrate.

8. The suspension concentrate as claimed in one or more of claims 1 to 3, comprising
a) one or more pesticides that are solid at room temperature and
b) one or more copolymers selected from the group consisting of copolymers of the formula (CP₁) and
c) optionally one or more further auxiliaries and
d) water and one or more water-immiscible solvents.

9. The suspension concentrate as claimed in one or more of claims 1 to 8, comprising
a) one or more pesticides that are solid at room temperature and
b) one or more copolymers selected from the group consisting of copolymers of the formula (CP₁) and
c) one or more copolymers obtainable by copolymerization of glycerol, at least one dicarboxylic acid and at least one monocarboxylic acid and
optionally one or more further auxiliaries and
d) one or more solvents.

10. The use of a suspension concentrate as claimed in one or more of claims 1 to 9 as crop protection composition.

## Revendications

1. Suspension concentrée, contenant
a) un ou plusieurs pesticides solides à température ambiante (25°C) et
b) un ou plusieurs copolymères choisis dans le groupe constitué par les copolymères de formule (CP₁) 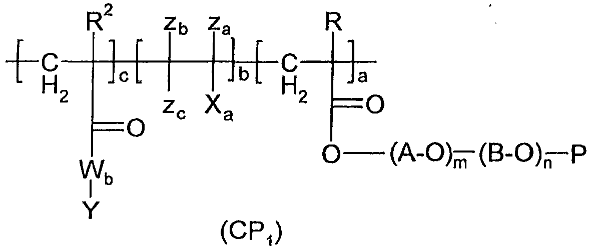 les indices a, b et c indiquant la proportion molaire de chaque unité structurale,
a valant 0,01-0,8,
b valant 0,001-0,8,
c valant 0,001-0,8 et
la somme de a + b + c valant 1,
A représentant C₂-C₄-alkylène,
B représentant C₂-C₄-alkylène différent de A,
R représentant hydrogène ou méthyle,
m représentant un nombre de 1 à 500,
n représentant un nombre de 1 à 500 et
la somme de m + n étant égale à 2 à 1000,
Xₐ représentant un radical aromatique ou araliphatique comprenant 3 à 30 atomes de carbone, qui contient le cas échéant un ou plusieurs des hétéroatomes N, 0 et S,
zₐ représentant H ou (C₁-C₄)-alkyle,
z_{b} représentant H ou (C₁-C₉)-alkyle,
z_{c} représentant H ou (C₁-C₄)-alkyle,
R² représentant hydrogène ou méthyle,
Y représentant un radical hydrocarboné aliphatique comprenant 6 à 30 atomes de carbone, qui peut être linéaire ou ramifié ou également cyclique et qui peut contenir les hétéroatomes O, N et/ou S et qui peut également être insaturé,
W_{b} représentant oxygène ou le groupe NH,
P représentant H, SO₃M, CH₂COOM, PO₃M₂, 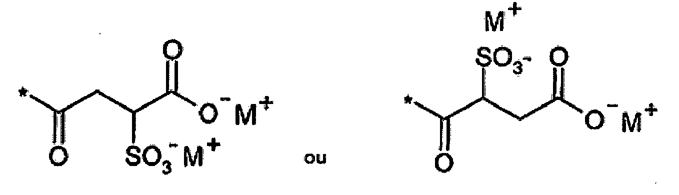 et
M représentant H, un cation métallique monovalent, un cation métallique divalent, NH₄⁺, un ion d'ammonium secondaire, tertiaire ou quaternaire ou une combinaison de ceux-ci ou des équivalents d'ions métalliques divalents, trivalents ou polyvalents, et
c) le cas échéant un ou plusieurs autres adjuvants et
d) un ou plusieurs solvants.

2. Suspension concentrée selon la revendication 1, **caractérisée en ce que** ledit un ou lesdits plusieurs pesticides solides à température ambiante du composant a) sont choisis dans le groupe constitué par les fongicides de type triazole, de type strobilurine, les insecticides de type néonicotinoïdine, de type phénylpyrazole, les herbicides de type benzoylcyclohexanedione, de type triazine et de type sulfonylurée.

3. Suspension concentrée selon la revendication 2, **caractérisée en ce que** ledit un ou lesdits plusieurs pesticides solides à température ambiante du composant a) sont choisis dans le groupe constitué par l'époxiconazole, le tébuconazole, l'azoxystrobine, la trifloxystrobine, l'imidaclopride, le thiaclopride, le thiaméthoxame, le fipronil, l'éthiprol, la mésotrione, la tembotrione, l'atrazine, le nicosulfuron, l'iodosulfuron et le mésosulfuron.

4. Suspension concentrée selon l'une ou plusieurs des revendications 1 à 3, contenant
a) un ou plusieurs pesticides solides à température ambiante et
b) un ou plusieurs copolymères choisis dans le groupe constitué par les copolymères de formule (CP₁) et
c) le cas échéant un ou plusieurs autres adjuvants et
d) de l'eau comme unique solvant.

5. Suspension concentrée selon la revendication 4, contenant
a) un ou plusieurs pesticides solides à température ambiante et
a2) un ou plusieurs pesticides solubles dans l'eau, différents des pesticides a), présentant une solubilité dans l'eau de plus de 50 g/l à température ambiante et
b) un ou plusieurs copolymères choisis dans le groupe constitué par les copolymères de formule (CP₁) et
c) le cas échéant un ou plusieurs autres adjuvants et
d) de l'eau comme unique solvant.

6. Suspension concentrée selon la revendication 5, **caractérisée en ce que** ledit un ou lesdits plusieurs pesticides a2) solubles dans l'eau sont choisis parmi les sels solubles dans l'eau d'herbicides et de préférence choisis dans le groupe constitué par les sels solubles dans l'eau de la N-phosphonométhylglycine (Glyphosate), du glufosinate, du 2,4-D, du dicamba, de la bentazone et du MCPA.

7. Suspension concentrée selon l'une ou plusieurs des revendications 1 à 3, contenant
a) un ou plusieurs pesticides solides à température ambiante et
b) un ou plusieurs copolymères choisis dans le groupe constitué par les copolymères de formule (CP₁) et
c) le cas échéant un ou plusieurs autres adjuvants et
d) un ou plusieurs solvants non miscibles à l'eau, **caractérisée en ce que** soit elle ne contient pas d'eau, soit elle contient de l'eau en une quantité inférieure ou égale à 1,0% en poids, par rapport au poids total de la suspension concentrée.

8. Suspension concentrée selon l'une ou plusieurs des revendications 1 à 3, contenant
a) un ou plusieurs pesticides solides à température ambiante et
b) un ou plusieurs copolymères choisis dans le groupe constitué par les copolymères de formule (CP₁) et
c) le cas échéant un ou plusieurs autres adjuvants et
d) de l'eau et un ou plusieurs solvants non miscibles à l'eau.

9. Suspension concentrée selon l'une ou plusieurs des revendications 1 à 8, contenant
a) un ou plusieurs pesticides solides à température ambiante et
b) un ou plusieurs copolymères choisis dans le groupe constitué par les copolymères de formule (CP₁) et
c) un ou plusieurs copolymères pouvant être obtenus par copolymérisation de glycérol, d'au moins un acide dicarboxylique et d'au moins un acide monocarboxylique et le cas échéant un ou plusieurs autres adjuvants et
d) un ou plusieurs solvants.

10. Utilisation d'une suspension concentrée selon l'une ou plusieurs des revendications 1 à 9 en tant qu'agent de phytoprotection.
